# EUROPEAN PATENT APPLICATION

(11) **EP 3 981 610 A1**
(43) Date of publication of application: **13.04.2022**
(21) Application number: 20822537.5
(22) Date of filing: 05.06.2020
(51) Int. Cl.: B60C 1/00, C08J 3/20, C08K 5/00, C08K 5/548, C08L 7/00, C08K 3/013

(54) **SILANE COUPLING AGENT COMPOSITION CONTAINING SILANE COMPOUND AND PROTEIN DENATURING AGENT, AND RUBBER COMPOSITION CONTAINING SAID COMPOSITION**

(30) Priority: 10.06.2019 JP 2019107806
(71) Applicant: ENEOS Corporation, Chiyoda-ku Tokyo 100-8162 (JP)
(72) Inventor: CHINO Keisuke, Tokyo 100-8162 (JP); ASHIURA Makoto, Tokyo 100-8162 (JP)
(74) Representative: Müller-Boré & Partner Patentanwälte PartG mbB
(86) International application number: PCT/JP2020/022284
(87) International publication number: WO 2020/250822

(57) **Abstract**

[Problem to be solved]

To provide a rubber composition which suppresses poor mixing or poor dispersion from occurring between an organic polymer material derived from natural rubber and an inorganic material such as silica and exhibits excellent viscoelastic properties, and a silane coupling agent composition used in the same.

[Means to Solve the Problem]

A silane coupling agent composition comprising a silane compound represented by Formula (1): 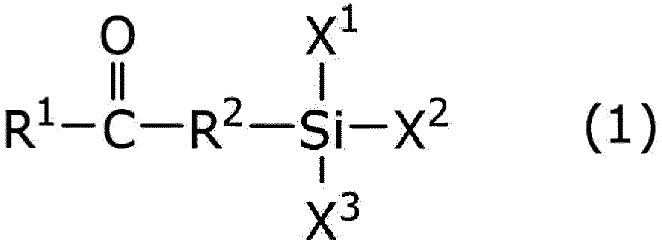 wherein R¹ represents a hydrogen atom or a monovalent hydrocarbon group containing at most 18 carbon atoms,
R² represents a bivalent hydrocarbon group containing at most 12 carbon atoms,
X¹ is selected from the group consisting of R³O- and R³C(= O)O-, wherein R³ represents a hydrogen atom or a monovalent hydrocarbon group containing at most 18 carbon atoms or a monovalent hydrocarbon group containing at most 18 carbon atoms and at least one oxygen atom,
X² and X³ is each independently selected from the group consisting of the elements listed in X¹ and R⁴, wherein R⁴ is a monovalent hydrocarbon group containing at most 6 carbon atoms; and/or a condensate thereof, and a protein modifying agent.

## Description

### BACKGROUND OF THE INVENTION

### [Field of the Invention]

The present invention relates to a silane coupling agent composition comprising a silane compound and a protein modifying agent, and a rubber composition comprising the same.

### [Background Art]

Conventionally, a silane compound having a reactive functional group and a hydrolyzable group has been used as a constituent of a silane coupling agent in a rubber composition in order to improve dispersibility of an organic polymer material such as rubber and an inorganic material such as silica. In addition, such a silane compound has been used as an adhesion aid in an adhesive composition or a sealing composition in order to improve adhesion to an inorganic material such as glass.

Usually, such a silane compound has a substituent such as a mercapto group, a polysulfide group, an amino group or an epoxy group as a reactive functional group having high reactivity with an organic polymer material such as rubber, and has a substituent such as an alkoxysilyl group as a hydrolyzable group having high reactivity with an inorganic material such as silica or glass. For example, Patent Document 1 discloses a rubber composition containing a polysulfide-based silane coupling agent. Patent document 2 proposes a silane compound having an amino group as a reactive functional group and a methoxy group as a hydrolyzable group.

With respect to the problem that impurities contained in natural rubber inhibit the reaction of a silane coupling agent (Non-Patent Document 1), Patent Document 3 discloses a rubber composition containing specific amounts of silica having a specific surface area and a specific glycerol mono fatty acid ester. In addition, Patent Document 4 discloses a rubber composition for tires using a modified natural rubber obtained by enzymatic treatment with a proteolytic enzyme followed by further enzymatic treatment with a lipolytic enzyme and/or a phospholipidolytic enzyme. In addition, Patent Document 5 discloses a method for producing a deproteinized natural rubber latex characterized in that a protein modifying agent selected from the group consisting of a urea compound and NaClO is added to natural rubber latex, and the protein in the latex is modified and subsequently removed. In addition, Patent Document 6 discloses a method for producing a modified natural rubber in which a urea compound is added to the natural rubber latex to isolate the protein from the rubber particles in the natural rubber latex, and the natural rubber is dried with the isolated protein included.

### [Prior Art Documents]

### [Patent Documents]

Patent Document 1: Japanese Patent Application Laid-Open Publication No. H8-259736
Patent Document 2: Japanese Patent Application Laid-Open Publication No. H11-335381
Patent Document 3: Japanese Patent Application Laid-Open Publication No. 2016-113515
Patent Document 4: Japanese Patent Application Laid-Open Publication No. 2016-74844
Patent Document 5: Japanese Patent Application Laid-Open Publication No. 2004-99696
Patent Document 6: Japanese Patent Application Laid-Open Publication No. 2010-111722

### [Non-patent document]

Non-patent Document 1: Sarkawi S. S. et al., European Polymer Journal vol. 49 p. 3199 (2013)

### SUMMARY OF THE INVENTION

### [Problem to be solved by the invention]

However, the reactive functional groups contained in the silane compounds proposed in Patent Documents 1 and 2 have a high polarity, and when the organic polymer material to be mixed has a low polarity, poor dispersion or poor mixing tendency to occur because the affinity between the silane compound and the organic polymer material is low. Therefore, when such a silane compound is contained in a rubber composition, it was likely that the hardness, tensile properties and viscoelasticity cannot be sufficiently improved of a molded article of a rubber composition such as a tire obtained by molding the rubber composition or the like. In addition, when such a silane compound is added to an adhesive or a sealant, there was a tendency that the affinity between the silane compound and an organic polymer material having a low polarity decreases and the adhesion to an inorganic material decreases. On the other hand, when a conventional silane compound having a reactive functional group having a low polarity is added in order to increase the affinity with an organic polymer material having a low polarity, the performance as a silane coupling agent or an adhesion aid is insufficient because the reactivity with the organic polymer material is low.

Further, the rubber composition described in Patent Document 3, in which silica having a specific surface area and a specific glycerol monofatty acid ester are blended in a specific amount, had room for further improvement in tensile properties such as modulus. In addition, the rubber composition for tires using the modified natural rubber obtained by enzymatic treatment with a proteolytic enzyme and then enzymatic treatment with a lipolytic enzyme and/or a phospholipidolytic enzyme, described in Patent Document 4, had a concern that the process becomes complicated and that it causes an increase in cost.

Further, although Patent Document 5 uses a protein modifying agent, it is a technique related to the production of liquid natural rubber latex, and there is no mention of dry rubber-like natural rubber. In addition, there is no description of a specific silane coupling agent. Patent Document 6 relates to the production of a solid natural rubber using a special apparatus after adding a protein modifying agent to natural rubber latex, but it does not describe a specific silane coupling agent.

The present inventors have intensively studied means for solving the problem that impurities (proteins, phospholipids and the like) in natural rubber inhibit the coupling reaction which causes poor mixing and poor dispersion between organic polymer materials including natural rubber and inorganic materials such as silica, and as a result, have found that by blending a silane compound having a specific structure and having a function as a coupling agent itself and a protein modifying agent in a rubber composition and the like, the coupling reaction accelerates, whereby dispersibility of the inorganic materials such as silica is improved, and the viscoelastic properties of rubber products and the like obtained from the rubber composition and the like are improved. The present invention is based on this finding.

Accordingly, it is an object of the present invention to provide a rubber composition which suppresses poor mixing or poor dispersion from occurring between an organic polymer material derived from natural rubber and an inorganic material such as silica and exhibits excellent viscoelastic properties, and a silane coupling agent composition used in the same.

### [MEANS FOR SOLVING THE PROBLEM]

The present invention includes the following inventions.
[1] A silane coupling agent composition comprising a silane compound represented by Formula (1): 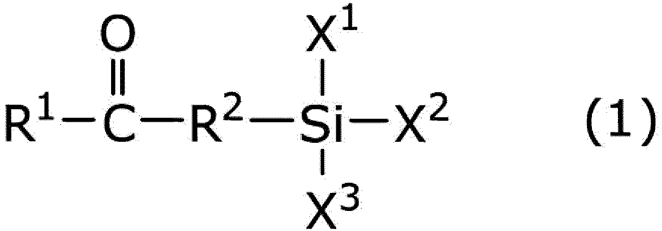
   wherein R¹ represents a hydrogen atom or a monovalent hydrocarbon group containing at most 18 carbon atoms,
   R² represents a bivalent hydrocarbon group containing at most 12 carbon atoms,
   X¹ is selected from the group consisting of R³O- and R³C(=O)O-, wherein R³ represents a hydrogen atom or a monovalent hydrocarbon group containing at most 18 carbon atoms or a monovalent hydrocarbon group containing at most 18 carbon atoms and at least one oxygen atom,
   X² and X³ is each independently selected from the group consisting of the elements listed in X¹ and R⁴, wherein R⁴ is a monovalent hydrocarbon group containing at most 6 carbon atoms; and/or a condensate thereof and a protein modifying agent.
[2] The silane coupling agent composition according to [1], wherein the silane compound is selected from the group consisting of triethoxysilylmethyl thioformate, 2-triethoxysilylethyl thioacetate, 3-triethoxysilylpropyl thiopropanoate, 3-triethoxysilylpropyl thiohexanoate, 3-octanoylthio-1-propyltriethoxysilane(3-triethoxysilylpropyl thiooctanoate), 3-diethoxymethylsilylpropyl thiooctanoate, 3-ethoxydimethylsilylpropyl thiooctanoate, 3-triethoxysilylpropyl thiododecanoate, 3-triethoxysilylpropyl thiooctadecanoate, 3-trimethoxysilylpropyl thiooctanoate, 3-triacetoxysilylpropyl thioacetate, 3-dipropoxymethylsilylpropyl thiopropanoate, 4-oxa-hexyloxydimethylsilylpropyl thiooctanoate, and mixtures thereof.
[3] The silane coupling agent composition according to [1], wherein the silane compound is selected from the group consisting of 3-octanoylthio-1-propyltriethoxysilane(3-triethoxysilylpropyl thiooctanoate), 3-diethoxymethylsilylpropyl thiooctanoate, and 3-ethoxydimethylsilylpropyl thiooctanoate.
[4] The silane coupling agent composition according to [1], wherein the silane compound is 3-octanoylthio-1-propyltriethoxysilane(3-triethoxysilylpropyl thiooctanoate).
[5] The silane coupling agent composition according to any one of [1] to [4], wherein the condensate is a condensate of 3-octanoylthio-1-propyltriethoxysilane(3-triethoxysilylpropyl thiooctanoate) and 3-mercaptopropyltriethoxysilane.
[6] The silane coupling agent composition according to any one of [1] to [5], wherein the protein modifying agent is at least one selected from the group consisting of a carbamide compound, a guanidine compound, and a surfactant.
[7] The silane coupling agent composition according to [6], wherein the carbamide compound is urea.
[8] The silane coupling agent composition according to [6], wherein the guanidine compound is at least one selected from the group consisting of guanidine hydrochloride and diphenylguanidine.
[9] The silane coupling agent composition according to [6], wherein the surfactant is sodium dodecyl sulfate.
[10] The silane coupling agent composition according to any one of [1] to [9], further comprising a silane compound other than the compound represented by Formula (1).
[11] The silane coupling agent composition according to [10], wherein the silane compound other than the compound represented by Formula (1) is a silane compound represented by Formula (3): 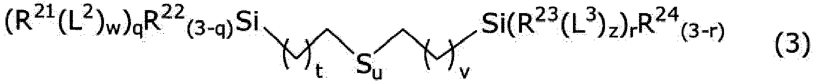
   wherein t and v are each independently an integer from 0 to 10,
   u is an integer from 2 to 10,
   q and r are each independently an integer from 1 to 3,
   wand z are each independently an integer from 0 to 1,
   L² and L³ are each independently a hydrocarbon group optionally containing at least one heteroatom selected from the group consisting of nitrogen, oxygen, and sulfur,
   R²¹ and R²³ are each independently an alkoxy group or an amino group substituted with one or more alkyl groups; and
   R²² and R²⁴ are each independently hydrogen or an alkyl group.
[12] The silane coupling agent composition according to any one of [1] to [11], wherein the ratio of the content of the silane compound other than the compound represented by Formula (1) in the silane coupling agent composition with respect to the total content of the silane compound in the silane coupling agent composition is 0.1 to 0.9 on a mass basis.
[13] The silane coupling agent composition according to any one of [1] to [12], used for natural rubber or deproteinized natural rubber.
[14] A rubber composition comprising the silane coupling agent composition according to any one of [1] to [13], at least one elastomer having a glass transition point of 25 °C or less selected from the group consisting of natural rubber and deproteinized natural rubber, and an inorganic material.
[15] The rubber composition according to [14], wherein the total content of the silane compound in the rubber composition is 0.1 to 30 parts by mass with respect to 100 parts by mass of the elastomer.
[16] A method for producing the rubber composition according to [14] or [15], comprising the step of kneading the silane compound, the protein modifying agent, the elastomer, and the inorganic material.
[17] The method according to [16], further comprising the step of prekneading the protein modifying agent and the elastomer prior to the step of kneading the silane compound, the protein modifying agent, the elastomer, and the inorganic material.
[18] The method according to [16] or [17], further comprising the step of kneading a vulcanizing agent.
[19] A cross-linked product of the rubber composition according to [14] or [15].
[20] A method for producing a cross-linked product comprising the step of extruding the rubber composition according to [14] or [15], the step of molding the extruded composition, and the step of cross-linking the molded composition.
[21] A tire comprising the cross-linked product according to [19].

### [Effect of the Invention]

The present invention is advantageous in respect that it provides a composition useful as a silane coupling agent containing a silane compound and a protein modifying agent, which does not inhibit the coupling reaction even in the presence of impurities contained in natural rubber or the like and, as a result, suppresses poor mixing or poor dispersion with an inorganic material such as silica. Furthermore, the present invention is advantageous in respect that by using the silane compound and the protein modifying agent in the composition of the present invention, it is possible to improve the viscoelastic properties of a cross-linked product obtained from a composition containing impurities contained in natural rubber or the like. Furthermore, the present invention is advantageous in that the unvulcanized viscosity of the rubber composition can be reduced. Furthermore, it is advantageous in that the tensile property (100 % modulus) of the cross-linked product obtained from the rubber composition of the present invention can be improved. The present invention is also advantageous in that the low fuel consumption performance of the cross-linked product obtained from the rubber composition can be improved. Furthermore, the present invention is advantageous in that the problem can be solved by changing to a simpler process compared with the prior art.

### [Mode for carrying out the Invention]

### 1. Definitions

In the present specification, "part", "%" and the like indicating the composition are based on mass unless otherwise specified.

### 2. Silane Coupling Agent Composition and Rubber Composition

The silane coupling agent composition of the present invention is characterized by containing a silane compound represented by Formula (1) and a protein modifying agent. The rubber composition is characterized by containing a silane compound represented by Formula (1) below, a protein modifying agent, an elastomer having a glass transition point of 25 °C or lower, and an inorganic material.

### (1) Silane Compound

### (i) Chemical Structure of Silane Compound

The silane compound contained in the silane coupling agent composition and the rubber composition of the present invention is a compound represented by the following Formula (1): 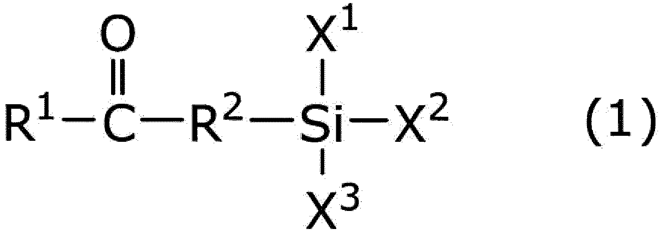
wherein R¹ represents a hydrogen atom or a monovalent hydrocarbon group containing at most 18 carbon atoms,
R² represents a bivalent hydrocarbon group containing at most 12 carbon atoms,
X¹ is selected from the group consisting of R³O- and R³C(=O)O-, wherein R³ represents a hydrogen atom or a monovalent hydrocarbon group containing at most 18 carbon atoms or a monovalent hydrocarbon group containing at most 18 carbon atoms and at least one oxygen atom,
X² and X³ is each independently selected from the group consisting of the elements listed in X¹ and R⁴, wherein R⁴ is a monovalent hydrocarbon group containing at most 6 carbon atoms.

In Formula (1) above, representative, non-limiting examples of R¹ include hydrogen, methyl, ethyl, propyl, isopropyl, butyl, hexyl, 2-ethylhexyl, octyl, decyl, octadecyl, cyclohexyl, phenyl, benzyl, and phenethyl.

In Formula (1) above, representative, non-limiting examples of R² include methylene, ethylene, propylene, isopyrene, butylene, hexylene, octylene, decylene, cyclohexylene, and phenylene.

In Formula (1) above, representative, non-limiting examples of R³ include hydrogen, methyl, ethyl, propyl, isopropyl, butyl, hexyl, 2-ethylhexyl, octyl, decyl, octadecyl, cyclohexyl, phenyl, benzyl, phenethyl, 3-oxabutyl, and 4,7-dioxaoctyl.

In Formula (1) above, representative, non-limiting examples of R⁴ include hydrogen, methyl, ethyl, propyl, isopropyl, butyl, and phenyl.

In Formula (1) above, representative, non-limiting examples of X¹ include methoxy, ethoxy, propoxy, isopropoxy, butoxy, phenoxy, benzyloxy, hydroxyl, and acetoxy. Representative examples of X² and X³ include methyl, ethyl, propyl, isopropyl, sec-butyl, phenyl, vinyl, and cyclohexyl, as well as the representative examples of X¹ mentioned above.

In still other embodiments of the invention, R¹ is an alkyl group containing 5 to 9 carbon atoms and is bonded to a carbonyl group via a primary carbon atom, R² is methylene, ethylene or propylene, X¹ is methoxy, ethoxy or propoxy, and X² and X³ each include representative examples of X¹ and methyl.

Representative examples of silane compounds contained in the silane coupling agent composition and the rubber composition of the invention include, but are not limited to, triethoxysilylmethyl thioformate, 2-triethoxysilylethyl thioacetate, 3-triethoxysilylpropyl thiopropanoate, 3-triethoxysilylpropyl thiohexanoate, 3-octanoylthio-1-propyltriethoxysilane(3-triethoxysilylpropyl thiooctanoate), 3-diethoxymethylsilylpropyl thiooctanoate, 3-ethoxydimethylsilylpropyl thiooctanoate, 3-triethoxysilylpropyl thiododecanoate, 3-triethoxysilylpropyl thiooctadodecanoate, 3-trimethoxysilylpropyl thiooctanoate, 3-triacetoxysilylpropyl thioacetate, 3-dipropoxymethylsilylpropyl thiopropanoate, 4-oxa-hexyloxydimethylsilylpropyl thiooctanoate, and mixtures thereof.

Among these, 3-octanoylthio-1-propyltriethoxysilane(3-triethoxysilylpropyl thiooctanoate), 3-diethoxymethylsilylpropyl thiooctanoate and 3-ethoxydimethylsilylpropyl thiooctanoate are preferred, and 3-octanoylthio-1-propyltriethoxysilane(3-triethoxysilylpropyl thiooctanoate) is more preferred.

### (ii) Method for Producing Silane Compound Represented bv Formula (1)

The method for producing the compound represented by Formula (1) contained in the silane coupling agent composition and the rubber composition of the present invention comprises incorporating a thioester group directly into an alkene functional silane by free radical addition of thio acid at a carbon-carbon double bond. The reaction may be catalyzed by ultraviolet light, heat, or by a suitable free radical initiator. The reaction may be carried out at elevated temperatures or by refluxing a mixture of alkene functional silane and thio acid. Various aspects of the reaction are described in U.S. Patent No. 3,692,812 and G.A. Gornowicz et al., J. Org. Chem. (1968), 33 (7), 2918-24. The non-catalytic reaction proceeds at a temperature of 105 °C or higher, and the reaction rate increases together with the temperature, and is preferably at 160 °C or higher. The reaction is more efficient by UV irradiation or using a catalyst. By using a catalyst, the reaction can proceed even at 90 °C or lower. Suitable catalysts are free radical initiators such as, for example, air, peroxides, especially organic oxides, and azo compounds. Examples of peroxide initiators include peracids such as perbenzoic acid and peracetic acid; esters of peracids; hydroperoxides such as t-butyl hydroperoxide; peroxides such as di-t-butyl peroxide; and peroxide acetals and ketals such as 1,1-bis(t-butylperoxy)cyclohexane, or any other peroxides. Examples of an azo initiator include azobisisobutyronitrile (AIBN), 1,1-azobis(cyclohexanecarbonitrile) (VAZO, manufactured by DuPont); and azo-tert-butane.

Reaction is carried out by heating a mixture of an alkene functional silane and a thioacid reactant together with an optimum catalyst. It is preferred that the overall reaction be carried out on an equimolar or nearly an equimolar basis to obtain the highest conversion. The reaction is exothermic and proceeds rapidly. The temperature tends to rise rapidly, followed by an intense reflux. In general, the reaction can be effectively controlled by adding a portion of one reactant to the other, initiating the reaction with the catalyst, allowing the reaction to proceed to near completion, and adding the remaining reactant either by a single addition or by multiple additions. The initial concentration and rate of addition and the number of times the depleted reagent is added depend on the type and amount of the catalyst used, the scale of the reaction, the nature of the starting material and the ability of the apparatus to absorb and dissipate heat.

In yet another method of preparation, an alkali metal salt of thio acid is reacted with haloalkyl silane. The first step is to prepare a salt of the thioacid. An alkali metal derivative is preferred, and a sodium derivative is more preferred. These salts are made in solution in a solvent, where the salts are fairly soluble, but also a case in which the salt is suspended in the solvent as a solid and the salt is slightly soluble is a viable option. Alcohols such as propanol, isopropanol, butanol, isobutanol, t-butanol and the like, and preferably methanol and ethanol, are particularly useful because the alkali metal salts are slightly soluble in them. When the desired product is alkoxysilane, it is preferred to use the alcohol corresponding to the silane alkoxy group to prevent transesterification of the silicon ester. Alternatively, an aprotic solvent may be used. Examples of suitable solvents are ethers or polyethers such as glyme, diglyme, and dioxane; N,N-dimethylformamide; N,N-dimethylacetamide; dimethyl sulfoxide; N-methylpyrrolidinone; and hexamethylphosphoramide.

When a solution, suspension of salts of thioacid or a combination thereof is made, the salt is reacted with the selected haloalkyl silane. This may be accomplished by stirring a mixture of haloalkyl silane with a solution, suspension of salts of thioacid or a combination thereof at a temperature corresponding to the liquid range of the solvent for a time sufficient for the reaction to be substantially complete. The preferred reaction temperature is such that the salt is fairly soluble in the solvent and the reaction proceeds at an acceptable rate without excessive side reactions. When the reaction is initiated from a chloroalkylsilane in which the chlorine atom is neither allyl nor benzyl, the preferred temperature is in the range of 60 °C to 160 °C. The reaction time may range from 1 hour or a few hours to a few days. For an alcohol solvent in which the alcohol has four or fewer carbon atoms, the most preferred temperature is at reflux or near reflux. If diglyme is used as the solvent, the preferred temperature is in the range of 70 °C to 120 °C, depending on the thioacid salt used. If the haloalkylsilane is bromoalkylsilane or chloroalkylsilane in which the chlorine atom is allyl or benzyl, a reduction in the reaction temperature of 30 °C to 60 °C is appropriate because of the higher reactivity of the bromo group. For the reaction between straight chain chloroalkylethoxysilane and sodium thiocarboxylate to form thiocarboxylic acid ester ethoxysilane, it is preferred to use ethanol at reflux for 10 to 20 hours if the presence of 5 to 20 % by weight of mercaptosilane in the reaction product is acceptable. Otherwise, it is preferred to use diglyme as the solvent, in which case the reaction is carried out for 1 to 3 hours in the range of 80 °C to 120 °C. When the reaction is complete, the salt and solvent are usually removed, followed by distillation of the reaction product to obtain high purity.

In yet another method of preparation, the compound of Formula (1) is obtained by a two phase reaction between an alkali metal salt of thioacid and haloalkyl silane. The alkali metal salt is soluble in the aqueous layer, whereas the haloalkyl silane has only a slight solubility in the aqueous layer, thus forming an organic layer. The reaction may be carried out at atmospheric pressure at a temperature in the range of 15 °C to 95 °C, or at higher temperatures if the pressure is increased to prevent boiling of the aqueous layer. Phase transfer catalysts such as n-butylammonium bromide or hexaethylguanidine may be used to increase the solubility of the alkali metal thioates in the organic layer, which may increase the rate of reaction, shorten the reaction time and thus minimize hydrolysis of the alkoxysilyl groups.

### (iii) Condensate of silane compound represented bv Formula (1)

The silane coupling agent composition and the rubber composition of the present invention can comprise a condensate of the silane compound represented by Formula (1) in place of or together with the silane compound represented by Formula (1). The condensate of the silane compound represented by Formula (1) can be prepared as a single condensate or a cocondensate with a silane compound alone or by partially hydrolyzing a silyl group and then polycondensing with a silyl group of another molecule together with deethanolation or dehydration in the presence of a compound represented by Formula (2): 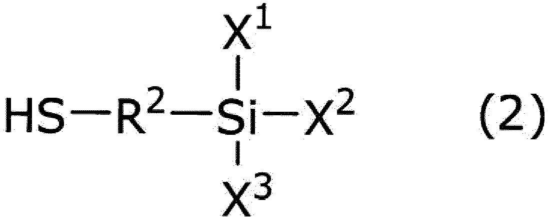
wherein R² is a bivalent hydrocarbon group containing at most 12 carbon atoms,
X¹ is selected from the group consisting of R³O- and R³C(= O)O-, wherein R³ represents a hydrogen atom or a monovalent hydrocarbon group containing at most 18 carbon atoms or a monovalent hydrocarbon group containing at most 18 carbon atoms and at least one oxygen atom,
X² and X³ is each independently selected from the group consisting of the elements listed in X¹ and R⁴, wherein R⁴ is a monovalent hydrocarbon group containing at most 6 carbon atoms. However, in order to make polycondensation happen, at least 2 or more of X¹, X² and X³ have to be R³O- or R³C(=O)O-.

### (2) Protein Modifying Agent

As the protein modifying agent contained in the silane coupling agent composition and the rubber composition of the present invention, protein modifying agents known to those skilled in the art can be used. The protein modifying agent may be of any kind which can reduce the stability of the high-order structure of the protein in the natural rubber. Typical protein modifying agents include carbamide compounds such as urea derivatives and thioureas; guanidine compounds such as guanidine hydrochloride, guanidinium thiocyanate, guanidine, diphenylguanidine, and the like; surfactants such as sodium dodecyl sulfate; glutaraldehyde, dimethyl suberimidate dihydrochloride, β mercaptoethanol, dithiothreitol, and the like. Any one of these protein modifying agents may be used, or two or more of them may be used in combination. Among these, carbamide compounds, guanidine compounds, and surfactants are preferably used, and urea derivatives, guanidine hydrochloride, diphenylguanidine, and sodium dodecyl sulfate are more preferably used. Examples of urea derivatives include urea, methylurea, ethylurea, propylurea, butylurea, pentylurea, hexylurea, cyclohexylurea, N,N'-dimethylurea, N,N'-diethylurea, N,N,N',N'-tetramethylurea, N,N-dimethyl-N',N'-diphenylurea, diethylurea, dipropylurea, dibutylurea, dipentylurea, dihexylurea, and salts thereof. Among these, urea is preferred.

The amount of protein modifying agent used depends on the type of protein modifying agent, but may be in any amount that reduces the stability of the higher order structure of the protein. The content of the protein modifying agent in the rubber composition is preferably 0.01 to 10 parts by mass, more preferably 0.05 to 5 parts by mass, further preferably 0.1 to 3.0 parts by mass, and further more preferably 0.5 to 2.5 parts by mass with respect to 100 parts by mass of the elastomer. When two or more kinds of protein modifying agents are contained, the total content is preferably within the above-mentioned numerical value range. When urea is used as the protein modifying agent, for example, it may be contained in an amount of preferably 0.01 to 10 parts by mass, more preferably 0.05 to 5 parts by mass, and further preferably 0.1 to 3 parts by mass with respect to 100 parts by mass of the elastomer. When guanidine hydrochloride is used as the protein modifying agent, for example, it may be contained in an amount of preferably 0.01 to 10 parts by mass, more preferably 0.05 to 5 parts by mass, and further preferably 0.1 to 3 parts by mass with respect to 100 parts by mass of the elastomer. When sodium dodecyl sulfate is used as the protein modifying agent, for example, it may be contained in an amount of preferably 0.01 to 10 parts by mass, more preferably 0.05 to 5 parts by mass, and further preferably 0.1 to 3 parts by mass with respect to 100 parts by mass of the elastomer.

### (3) Elastomer

The elastomer in the rubber composition of the present invention is at least one kind of elastomer having a glass transition point of 25 °C or lower, selected from the group consisting of natural rubber and deproteinized natural rubber (when the elastomer comprises two or more polymers, it is a mixture thereof). Here, the deproteinized natural rubber is a natural rubber which has been deproteinized, and although the protein content thereof is lower than that of normal natural rubber, the protein content has not been completely removed. The natural rubber or deproteinized natural rubber contains impurities derived from natural rubber (proteins, phospholipids and the like), which caused the problem that they inhibit the coupling reaction of the silane coupling agent and resulting in that the mixed inorganic material such as silica is not sufficiently dispersed in the elastomer. The present invention is to solve such problem, and the elastomer in the rubber composition of the present invention comprises natural rubber or deproteinized natural rubber in whole or at least in part.

The glass transition point (Tg) of the elastomer in the rubber composition of the present invention is 25 °C or lower, preferably 0 °C or lower. It is preferable because when the glass transition point (Tg) of the elastomer is within this range, the rubber composition exhibits rubber-like elasticity at room temperature. In the present invention, the glass transition point (Tg) is a glass transition point measured by differential scanning calorimetry (DSC-Differential Scanning Calorimetry). The heating rate is preferably set to 10 °C / min.

Elastomers which may optionally be included in addition to natural rubber and deproteinized natural rubber include known natural or synthetic polymers having a glass transition point of 25 °C or lower, which may be liquid or solid. Specific examples thereof include at least one selected from the group consisting of butadiene rubber, nitrile rubber, silicone rubber, isoprene rubber, styrene-butadiene rubber, isoprene-butadiene rubber, styrene-isoprene-butadiene rubber, ethylene-propylene-diene rubber, halogenated butyl rubber, halogenated isoprene rubber, halogenated isobutylene copolymer, chloroprene rubber, butyl rubber and halogenated isobutylene-p-methylstyrene rubber. They may be used as any blends with natural rubber or deproteinized natural rubber.

Elastomers which may be contained in addition to the above-mentioned natural rubber and deproteinized natural rubber are preferably one or more polymers selected from the group consisting of butadiene rubber, isoprene rubber, styrene-butadiene rubber, ethylene-propylene-diene rubber, halogenated butyl rubber, butyl rubber and halogenated isobutylene-p-methylstyrene rubber among the above-mentioned polymers.

It is preferred that the elastomer in the rubber composition of the present invention comprises natural rubber and/or deproteinized natural rubber.

The weight-average molecular weight of the elastomer in the rubber composition of the present invention is preferably 1,000 to 3,000,000, more preferably 10,000 to 1,000,000. In the present invention, the weight-average molecular weight is a weight-average molecular weight (in terms of polystyrene) measured by gel permeation chromatography (GPC). It is preferable to use tetrahydrofuran (THF), N,N-dimethylformamide (DMF), or chloroform as a solvent for the measurement.

The content of the compound represented by Formula (1) in the rubber composition of the present invention is preferably 0.1 to 30 parts by mass, more preferably 0.3 to 20 parts by mass, further preferably 0.4 to 15 parts by mass, further more preferably 0.7 to 10 parts by mass, particularly preferably 0.7 to 6.9 parts by mass, particularly more preferably 1 to 5.0 parts by mass, and particularly even more preferably 1 to 3.4 parts by mass, with respect to 100 parts by mass of the elastomer. The content of the compound represented by Formula (1) is preferably 0.1 to 30 parts by mass, more preferably 0.5 to 20 parts by mass, and further preferably 1.0 to 15 parts by mass with respect to 100 parts by mass of the total amount of the inorganic material contained in the rubber composition.

In addition, by incorporating a compound represented by Formula (1) above and a protein modifying agent into the rubber composition of the present invention, it is possible to improve the mechanical strength and fuel efficiency of the elastomer. In addition, since the kneading process can be shortened, it is also possible to reduce the cost.

### (4) Silane Compound other than Compound represented by Formula (1)

The silane coupling agent composition and the rubber composition of the present invention may further contain a silane compound other than the compound represented by Formula (1) (also may be referred to as the "other silane compound" in the present specification). When a rubber composition containing a silane compound other than the compound represented by Formula (1) is subjected to a vulcanization reaction, the silane compound other than the compound represented by Formula (1) is incorporated into the vulcanization reaction, so that the silane compound other than the compound represented by Formula (1) functioning as a silane coupling agent reacts with the silane compound other than the compound represented by Formula (1). This reaction is considered to have a synergistic effect of increasing the coupling efficiency. In the silane coupling agent composition and rubber composition of the present invention, the silane compound other than the compound represented by Formula (1) is preferably a sulfur-containing silane compound (another sulfur-containing silane compound) other than the compound represented by Formula (1).

The content of the silane compound other than the compound represented by Formula (1) is preferably 0.01 to 27 parts by mass and more preferably 0.03 to 18 parts by mass with respect to 100 parts by mass of the elastomer. The content of the silane compound other than the compound represented by Formula (1) is preferably 0.01 to 27 parts by mass, more preferably 0.05 to 18 parts by mass, and further preferably 0.1 to 13.5 parts by mass with respect to 100 parts by mass of the total amount of the inorganic material contained in the rubber composition.

In the rubber composition of the present invention, the total content of the compound represented by Formula (1) and the silane compound other than the compound represented by Formula (1) is preferably 0.1 to 30 parts by mass, more preferably 0.3 to 20 parts by mass, further preferably 0.4 to 15 parts by mass, further more preferably 0.7 to 10 parts by mass, particularly preferably 0.7 to 6.9 parts by mass, particularly more preferably 1 to 5.0 parts by mass, and particularly even more preferably 1 to 3.4 parts by mass, with respect to 100 parts by mass of the elastomer. The total content of the compound represented by Formula (1) and the silane compound other than the compound represented by Formula (1) is preferably 0.1 to 30 parts by mass, more preferably 0.5 to 20 parts by mass, and further preferably 1.0 to 15 parts by mass, with respect to 100 parts by mass of the total amount of the inorganic material contained in the rubber composition.

In the silane coupling agent composition and rubber composition of the present invention, the ratio of the content of a silane compound other than the compound represented by Formula (1) to the total content of the compound represented by Formula (1) and the silane compound other than the compound represented by Formula (1) is preferably 0.1 to 0.9 on a mass basis, and more preferably 0.2 to 0.8.

As a silane compound other than the compound represented by Formula (1), it is possible to use a compound represented by, for example, Formula (3): 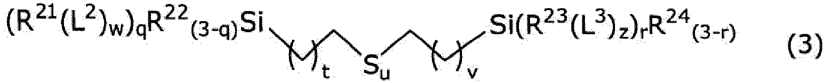 wherein
t and v are each independently an integer of 0 to 10;
u is an integer of 2 to 10;
q and r are each independently an integer of 1 to 3;
wand z are each independently an integer of 0 or 1;
L² and L³ are each independently a hydrocarbon group optionally containing at least one heteroatom selected from the group consisting of nitrogen, oxygen and sulfur;
R²¹ and R²³ are each independently an alkoxy group or an amino group substituted with one or more alkyl groups; and
R²² and R²⁴ are each independently a hydrogen atom or an alkyl group.

In Formula (3) above, t and v each independently represent an integer of 0 to 10, preferably an integer of 0 to 5, more preferably an integer of 1 to 3, and further preferably 2.
u represents an integer of 2 to 10 and more preferably an integer of 2 to 8.
g and r each independently represent an integer of 1 to 3, preferably an integer of 2 to 3, and more preferably 3.
wand z each independently represent an integer of 0 or 1 and preferably 0.
L² and L³ are each independently a hydrocarbon group optionally containing at least one heteroatom selected from the group consisting of nitrogen, oxygen, and sulfur, preferably a hydrocarbon group having 1 to 30 carbons, optionally containing at least one heteroatom selected from the group consisting of nitrogen, oxygen, and sulfur, more preferably a hydrocarbon group having 1 to 20 carbons, optionally containing at least one heteroatom selected from the group consisting of nitrogen, oxygen, and sulfur, and further preferably a hydrocarbon group having 1 to 10 carbons, optionally containing at least one heteroatom selected from the group consisting of nitrogen, oxygen, and sulfur.
R²¹ and R²³ each independently represent a hydrolyzable group, and an alkoxy group, more preferably an alkoxy group having 1 to 30 carbons, more preferably an alkoxy group having 1 to 20 carbons, or an amino group substituted with one or more alkyl groups, more preferably an amino group substituted with one or more alkyl groups having 1 to 30 carbons, and more preferably an amino group substituted with one or more alkyl groups having 1 to 20 carbons. Specifically, examples of the alkoxy group include a methoxy group, ethoxy group, propoxy group, isopropoxy group, butoxy group, and isobutoxy group, and among these, a methoxy group or an ethoxy group is preferable. Examples of the amino group substituted with one or more alkyl groups include an N-methylamino group, N,N-dimethylamino group, N-ethylamino group, N,N-diethylamino group, and N-isopropylamino group, and among these, an N-methylamino group or an N-ethylamino group is preferable. Note that, the alkoxy group and the amino group may be bonded to silicon (Si) via a connecting group consisted of a hydrocarbon group optionally containing at least one heteroatom selected from the group consisting of nitrogen, oxygen, and sulfur.

In addition, R²² and R²⁴ each independently represent a hydrogen atom or an alkyl group, more preferably an alkyl group having 1 to 30 carbons, further preferably an alkyl group having 1 to 20 carbons, and specific examples thereof include a methyl group, ethyl group, propyl group, isopropyl group, butyl group, isobutyl group, tert-butyl group, pentyl group, cyclopentyl group, hexyl group, and cyclohexyl group, among which a methyl group and an ethyl group are preferable.

The content of the compound represented by Formula (3) above in the rubber composition of the present invention is preferably 0.01 to 27 parts by mass and more preferably 0.03 to 18 parts by mass with respect to 100 parts by mass of the elastomer. The content of the compound represented by Formula (3) above in the rubber composition of the present invention is preferably 0.01 to 27 parts by mass, more preferably 0.05 to 18 parts by mass, further preferably 0.1 to 13.5 parts by mass with respect to 100 parts by mass of the total amount of the inorganic material contained in the rubber composition.

As the silane compound other than the compound represented by Formula (1), it is possible to use a silane compound having the following structure, in addition to the compound represented by Formula (3) above.

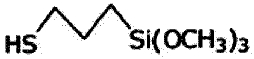

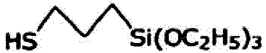

### (5) Inorganic materials

Examples of inorganic materials contained in the rubber composition of the present invention include silica, carbon black, calcium carbonate, titanium oxide, clay and talc, which may be used alone or in combination of two or more thereof. Among these, silica or carbon black is preferably used because it is possible to further improve the mechanical properties and heat resistance. The amount of the inorganic material added is preferably from 0.1 to 500 parts by mass, and more preferably from 1 to 300 parts by mass per 100 parts by mass of the elastomer.

Silica is not particularly limited, and examples thereof include dry method silica, wet method silica, colloidal silica and precipitated silica. Preferred among these is wet method silica having hydrated silicic acid as a main component. These silicas may be used alone or in combination of two or more thereof. The amount of silica added is preferably 1 to 300 parts by mass, more preferably 5 to 200 parts by mass, and further preferably 10 to 150 parts by mass per 100 parts by mass of the elastomer. The specific surface area of these silicas is not particularly limited, and reinforcing properties, abrasion resistance, heat generation properties, and the like can be sufficiently improved when the specific surface area is generally in the range of 10 to 400 m²/g, preferably 20 to 300 m²/g, and further preferably 120 to 190 m²/g according to nitrogen adsorption specific surface area (BET method). Here, the nitrogen adsorption specific surface area is a value measured by the BET method according to ASTM D3037-81.

Carbon black is appropriately selected and used according to the application. Generally, carbon black is classified into hard carbon and soft carbon based on the particle size. Soft carbon has a low reinforcing property against rubber, and hard carbon has a high reinforcing property against rubber. In the rubber composition of the present invention, it is preferable to use a hard carbon having a particularly high reinforcing property. The amount of carbon black added is preferably from 1 to 300 parts by mass, more preferably from 5 to 200 parts by mass, and further preferably from 10 to 150 parts by mass with respect to 100 parts by mass of the elastomer. The carbon black may be added to the rubber composition or may be added to the silane coupling agent composition.

### (6) Other Processing Aids

The rubber composition of the present invention may contain other processing aids as long as the function is not impaired such as a vulcanizing agent such as sulfur, cross-linking agent, vulcanization accelerator, cross-linking accelerator, vulcanization acceleration aid, anti-aging agent, softening agent, various oils, antioxidant, anti-aging agent, filler, and a plasticizer.

Examples of the anti-aging agent include compounds such as hindered phenol compounds, aliphatic compounds and aromatic hindered amine compounds, and they are added in an amount of 0.1 to 10 parts by mass, more preferably 1 to 5 parts by mass, based on 100 parts by mass of the elastomer. Examples of the antioxidant include butyl hydroxy toluene (BHT), butyl hydroxy anisole (BHA), and the like. They are preferably added in an amount of 0.1 to 10 parts by mass, more preferably 1 to 5 parts by mass, based on 100 parts by mass of the elastomer.

Examples of a colorant include inorganic pigments such as titanium dioxide, zinc oxide, ultramarine, red iron oxide, lithopone, lead, cadmium, iron, cobalt, aluminum, hydrochloride, and sulfate, azo pigment, copper phthalocyanine pigment, and the like. They are added in an amount from 0.1 to 10 parts by mass, more preferably 1 to 5 parts by mass, based on 100 parts by mass of the elastomer.

Examples of the vulcanizing agent include sulfur-based vulcanizing agents such as powder sulfur, precipitated sulfur, highly dispersible sulfur, surface-treated sulfur, insoluble sulfur, dimorpholin disulfide, and alkylphenol disulfide, and zinc oxide, magnesium oxide, litharge, p-quinone dioxam, p-dibenzoylquinonedioxime, tetrachloro-p-benzoquinone, poly-p-dinitrobenzene, methylenedianiline, phenol resin, brominated alkylphenol resin, chlorinated alkylphenol resin, and the like.

Examples of the vulcanization accelerator include fatty acids such as acetyl acid, propionic acid, butane acid, stearic acid, acrylic acid, and maleic acid; fatty acid zincs such as zinc acetylate, zinc propionate, zinc butanoate, zinc stearate, zinc acrylate, and zinc maleate; and fatty acid zinc, and zinc oxide.

Examples of the vulcanization acceleration aid include vulcanization acceleration aid of thiurams such as tetramethylthiuram disulfide (TMTD), tetraethylthiuram disulfide (TETD), and tetramethylthiuram monosulfide (TMTM); aldehyde/ammonias such as hexamethylenetetramine; guanidines such as diphenylguanidine; thiazoles such as 2-mercaptobenzothiazole (MBT) and dibenzothiazyl disulfide (DM); sulfenamides such as N-cyclohexyl-2-benzothiazyl sulfenamide (CBS) and N-t-butyl-2-benzothiazyl sulfenamide (BBS); and dithiocarbamates such as dimethyl dithiocarbamic acid (ZnPDC).

In the present invention, other processing aids can be used as a rubber composition by kneading with a known rubber kneading machine, for example, a roller, Banbury mixer, kneader, and the like, and vulcanizing under any conditions. The amount of these other processing aids to be added can also be set to a conventional general amount as long as it does not violate the purpose of the present invention.

### (7) Method for Producing Rubber Composition

The method for producing a rubber composition of the present invention comprises a step of kneading the silane compound above, the protein modifying agent above, the elastomer having a glass transition point of 25 °C or lower above, and the inorganic material above. The method may further comprise a step of pre-kneading the protein modifying agent and the elastomer before the step of kneading the silane compound, the protein modifying agent, the elastomer and the inorganic material. In addition, the silane compound may contain a silane compound other than the compound represented by Formula (1). The process for producing a rubber composition of the present invention preferably comprises a step of kneading the silane compound, the protein modifying agent, the elastomer having a glass transition point of 25 °C or lower, the inorganic material, and the vulcanization acceleration aid.

The method for producing the rubber composition described above may preferably further comprise a step of kneading the vulcanizing agent. More preferably, the method for producing the rubber composition may further comprise a step of kneading the vulcanizing agent and the vulcanization accelerator.

The total content of the compound represented by Formula (1) and the silane compound other than the compound represented by Formula (1) in the rubber composition is preferably 0.1 to 30 parts by mass, more preferably 0.3 to 20 parts by mass, further preferably 0.4 to 15 parts by mass, further more preferably 0.7 to 10 parts by mass, particularly preferably 0.7 to 6.9 parts by mass, particularly more preferably 1 to 5.0 parts by mass, and particularly even more preferably 1 to 3.4 parts by mass with respect to 100 parts by mass of the elastomer. When the rubber composition contains a silane compound other than the compound represented by Formula (1), the ratio of the content of the silane compound other than the compound represented by Formula (1) to the total content of the compound represented by Formula (1) and the silane compound other than the compound represented by Formula (1) is preferably 0.1 to 0.9 and more preferably 0.2 to 0.8 on a mass basis.

In each of the above-mentioned steps, the above-mentioned other processing aids may be appropriately blended within a range not impairing the function of the rubber composition.

### (8) Cross-linked product of the rubber composition of the present invention

Using the rubber composition of the present invention, a cross-linked product of the rubber composition can be produced according to conventionally known methods and common general knowledge widely known to those skilled in the art. For example, the rubber composition is extruded, then molded using a molding machine, subsequently heated and pressurized using a vulcanizing machine, thereby forming a cross-link to give a cross-linked product.

### (9) Tire

Using the rubber composition, a tire can be produced by a conventionally known method and common general knowledge widely known to a person skilled in the art. For example, the rubber composition is extruded and then molded using a tire molding machine, subsequently heated and pressurized using a vulcanizing machine, thereby forming a cross-link to give a tire. In one embodiment, the tire of the present invention is a tire comprising the cross-linked product.

By producing a tire using the rubber composition of the present invention, it is possible to achieve a balanced improvement in wet grip performance and low fuel consumption in tire performance.

### EXAM PLES

Hereinafter, the present invention shall be described in more details with reference to the Examples, but the present invention shall not be limited to these Examples.

### 1. Silane Compound used

The following compounds were used as Silane Compound 1 and Silane Compound 2 in the following Examples.

### (1) Silane Compound 1

Silane Compound 1 is a compound (Chemical name: 3-octanoylthio-1-propyltriethoxysilane) represented by structural Formula (4).

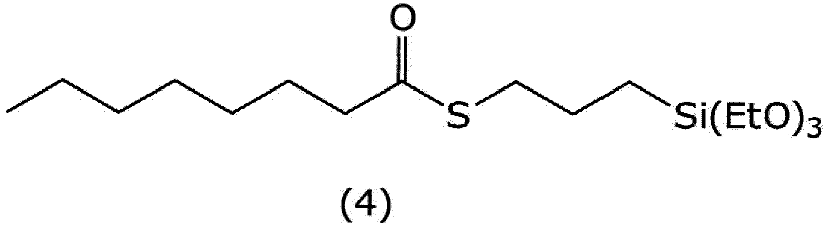

As the Silane Compound 1 in the Examples, a silane compound commercially available under the product name of NXT silane from Momentive was used.

### (2) Silane Compound 2

Silane Compound 2 is a compound represented by structural Formula (5): 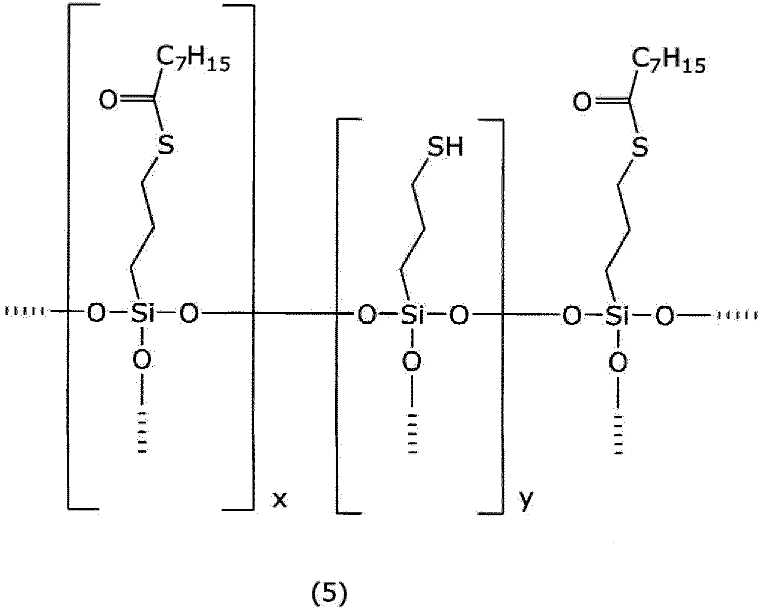 wherein x : y is 1 : 99 to 99 : 1. As the Silane Compound 2 in the Examples, a silane compound commercially available from Momentive with the product name NXT Z45 silane was used. Further, the Silane Compound 2 can be prepared as a single condensate or a co-condensate by partially hydrolyzing a triethoxysilyl group with the Silane Compound 1 alone or in the presence of 3-mercaptopropyl triethoxysilane, followed by polycondensation with a triethoxysilyl group of another molecule accompanied by removal of ethanol or dehydration.

### 2. Example 1: Preparation and Evaluation of Rubber Composition and Rubber Sheet Containing Silane Compound 1, Urea and Natural Rubber

### (1) Example 1-1

### Preparation of Rubber Composition and Rubber Sheet

Each of the following components was kneaded using a 100 mL kneader (Laboplast Mill manufactured by Toyo Seiki Co., Ltd.) to obtain a rubber composition. The rubber composition was subjected to press vulcanization at 150 °C for 25 minutes to obtain a rubber sheet having a thickness of 2 mm made of the rubber composition.
- Natural rubber (RSS #3, made in Thailand) 100 parts by mass
- Protein Modifying Agent 1 (product name: urea; manufactured by Wako Pure Chemical Corporation) 1 part by mass
- Silane Compound 1 (Compound of Formula (4)) (product name: NXT silane, manufactured by Momentive) 3.2 parts by mass
- Silica AQ (product name : Nip Seal AQ; manufactured by Tosoh Corporation) 40 parts by mass
- Zinc Oxide No. 3 (product name: Ginrei R, manufactured by Toho Zinc Co., Ltd.) 3 parts by mass
- Stearic Acid (product name : Stearic acid 300; manufactured by New Japan Chemical Co., Ltd.) 1 part by mass
- Anti-aging agent (manufactured by Ouchi Shinko Chemical Industrial Co., Ltd., NOCRAC 6C) 1 part by mass
- Sulfur (5 % oil-treated sulfur, manufactured by Hosoi Chemical Industry Co., Ltd.) 2 parts by mass
- Vulcanization accelerator (product name : NOCCELER CZ, manufactured by Ouchi Shinko Chemical Industrial Co., Ltd.) 1 part by mass
- Vulcanization accelerator (product name: NOCCELER D, manufactured by Ouchi Shinko Chemical Industrial Co., Ltd.) 0.5 parts by mass

### (2) Example 1-2

A rubber composition and a rubber sheet were obtained in the same manner as in Example 1-1 except that the amount of urea added was 2 parts by mass.

### (3) Comparative Example 1-1

A rubber composition and a rubber sheet were obtained in the same manner as in Example 1-1 except that urea was not contained, Silane Compound 1 (compound of Formula (4)) was not contained, and the addition amount of another silane compound (Si69) was 3.2 parts by mass.

### (4) Comparative Example 1-2

A rubber composition and a rubber sheet were obtained in the same manner as in Example 1-1 except that urea was not contained.

### (5) Comparative Example 1-3

A rubber composition and a rubber sheet were obtained in the same manner as in Example 1-1 except that the Silane Compound 1 (compound of Formula (4)) was not contained and the addition amount of another silane compound (Si69) was 3.2 parts by mass.

### (6) Physical Property Evaluation

Physical properties of the rubber compositions and rubber sheets obtained in Examples 1-1 to 1-2 and Comparative Examples 1-1 to 1-3 above were evaluated by the following method.

### (Viscosity)

Mooney viscosity of the rubber compositions obtained in Examples 1-1 to 1-2 and Comparative Examples 1-1 to 1-3 was measured according to JIS K6300 using an L-type rotor (38.1 mm in diameter and 5.5 mm in thickness) with a Mooney viscometer under conditions of a preheating time of 1 minute, a rotor rotation time of 4 minutes, and 100 °C at 2 rpm. The smaller the measurement result means the smaller the viscosity is and the better the workability is.

### (Hardness)

Three rubber sheets (thickness: 2 mm) obtained in Examples 1-1 to 1-2 and Comparative Examples 1-1 to 1-3 were stacked and measured for JIS-A hardness according to JIS K6353 (issued in 2012). The larger the measurement result means the higher the hardness of the rubber sheet is and the more excellent the steering stability as a tire is.

### (Viscoelasticity)

Using a viscoelastic measuring device (REOGEL E-4000 manufactured by UBM Co., Ltd.), the rubber sheets obtained in Examples 1-1 to 1-2 and Comparative Examples 1-1 to 1-3 were determined for tan δ at measurement temperatures of 0 °C and 60 °C under conditions of deformation of about 0.1 %, frequency of 10 Hz, in accordance with JIS K6394, and from the values, tan δ balance (= tan δ (0 °C) / tan δ (60 °C)) was calculated. The greater the tan δ balance means the better the viscoelastic properties of the rubber sheet is and the better the balance between wet grip properties and fuel consumption properties as a tire is.

### (Tensile Strenath)

No. 3 dumbbell-shaped test pieces were punched out from the rubber sheets obtained in Examples 1-1 to 1-2 and Comparative Examples 1-1 to 1-3, and a tensile test at a tensile speed of 500 mm/min in accordance with JIS K6251 (issued in 2010) was conducted, and 100 % modulus [MPa] was measured at room temperature (25 °C). The larger the measurement result means the higher the tensile strength of the rubber sheet is and the better the performance as a tire is.

The above measurement results and calculation results (tan δ balance) are shown in Table 1. Each measured value and each calculated value is expressed by an index in which each value in Comparative Example 1-1 is set to 100.

**[Table 1]**

| Table 1 | | Ex. 1-1 | Ex. 1-2 | Comp. Ex. 1-1 | Comp. Ex. 1-2 | Comp. Ex. 1-3 |
|---|---|---|---|---|---|---|
| Composition of Rubber composition (parts by mass) | Natural Rubber (RSS#3) | 100 | 100 | 100 | 100 | 100 |
| | Silica AQ | 40 | 40 | 40 | 40 | 40 |
| | Zinc Oxide No. 3 | 3 | 3 | 3 | 3 | 3 |
| | Stearic acid | 1 | 1 | 1 | 1 | 1 |
| | Anti-aging agent (NOCRAC 6C) | 1 | 1 | 1 | 1 | 1 |
| | Silane Compound 1 (Compound of Formula (4)) | 3.2 | 3.2 | 0 | 3.2 | 0 |
| | Another Silane Compound (Si69) | 0 | 0 | 3.2 | 0 | 3.2 |
| | Protein-modifying agent 1 (urea) | 1 | 2 | 0 | 0 | 1 |
| | Sulfur (5% oil treated) | 2 | 2 | 2 | 2 | 2 |
| | Vulcanization accelerator (NOCCELER CZ) | 1 | 1 | 1 | 1 | 1 |
| | Vulcanization accelerator (NOCCELER D) | 0.5 | 0.5 | 0.5 | 0.5 | 0.5 |
| Viscosity | ML1+4 100 °C (index) | 70 | 71 | 100 | 104 | 92 |
| Hardness | JIS-A Hardness | 107 | 107 | 100 | 103 | 102 |
| Viscoelasticity | tanδ(0 °C) (index) | 92 | 93 | 100 | 93 | 97 |
| | tanδ(60 °C) (index) | 67 | 64 | 100 | 97 | 82 |
| | tanδ(0 °C)/tanδ (60 °C)(index) | 137 | 145 | 100 | 95 | 118 |
| Tensile strength | 100% Modulus (index) | 118 | 141 | 100 | 101 | 106 |

The results of Examples 1-1 to 1-2 show lower viscosity, better tan δ balance and higher tensile strength (100 % modulus) than those of Comparative Example 1-2 in which urea was not added. The results of Examples 1-1 to 1-2 show lower viscosity, better tan δ balance and higher tensile strength (100 % modulus) than those of Comparative Example 1-3 in which urea was added and another silane compound was contained. In addition, in Examples 1-1 to 1-2, it was seen that the tan δ balance improved and the tensile strength (100% modulus) increased as the amount of urea added increased. Therefore, it has been found that the rubber compositions of the present invention can be used to produce tires having excellent balance between wet grip and low fuel consumption in practical use.

### 3. Example 2: Preparation and Evaluation of Rubber Composition and Rubber Sheet Containing Silane Compound 1, Protein Modifying Agent and Natural Rubber (Part 2: Evaluation of Various Protein Modifying Agents)

### (1) Example 2-1

### Preparation of Rubber Composition and Rubber Sheet

Each of the following components was kneaded using a 100 mL kneader (Laboplast Mill manufactured by Toyo Seiki Co., Ltd.) to obtain a rubber composition. Then, the rubber composition was placed in a mold (150 mm × 150 mm × 2 mm) and heated and pressurized at 150 °C for 25 minutes to obtain a rubber sheet having a thickness of 2 mm.
- Natural rubber (RSS #3, made in NZ) 100 parts by mass
- Protein Modifying Agent 2 (product name: 50 % aqueous solution of glutaraldehyde; manufactured by Tokyo Chemical Industry Co., Ltd.) 2 parts by mass
- Silane Compound 1 (Compound of Formula (4)) (product name: NXT silane, manufactured by Momentive) 3.2 parts by mass
- Silica AQ (product name : Nip Seal AQ; manufactured by Tosoh Corporation) 40 parts by mass
- Zinc Oxide No. 3 (product name: Ginrei R, manufactured by Toho Zinc Co., Ltd.) 3 parts by mass
- Stearic Acid (product name : Stearic acid 300; manufactured by New Japan Chemical Co., Ltd.) 1 part by mass
- Anti-aging agent (manufactured by Ouchi Shinko Chemical Industrial Co., Ltd., NOCRAC 6C) 1 part by mass
- Sulfur (5 % oil-treated sulfur, manufactured by Hosoi Chemical Industry Co., Ltd.) 2.00 parts by mass
- Vulcanization accelerator (product name : NOCCELER CZ, manufactured by Ouchi Shinko Chemical Industrial Co., Ltd.) 1 part by mass
- Vulcanization accelerator (product name: NOCCELER D, manufactured by Ouchi Shinko Chemical Industrial Co., Ltd.) 0.5 parts by mass

### (2) Example 2-2

A rubber composition and a rubber sheet were obtained in the same manner as in Example 2-1 except that 2 parts by mass of a 50 % aqueous solution of glutaraldehyde was added to 1 part by mass of Protein Modifying Agent 3 (dimethyl suberimidate dihydrochloride (Tokyo Chemical Industry Co., Ltd.)).

### (3) Example 2-3

A rubber composition and a rubber sheet were obtained in the same manner as in Example 2-1 except that 2 parts by mass of a 50 % aqueous solution of glutaraldehyde was added to 1 part by mass of Protein Modifying Agent 4 (sodium dodecyl sulfate (Tokyo Chemical Industry Co., Ltd.)).

### (4) Example 2-4

A rubber composition and a rubber sheet were obtained in the same manner as in Example 2-1 except that 2 parts by mass of a 50 % aqueous solution of glutaraldehyde was added to 1 part by mass of Protein Modifying Agent 5 (guanidine hydrochloride (Tokyo Chemical Industry Co., Ltd.)).

### (5) Comparative Example 2-1

A rubber composition and a rubber sheet were obtained in the same manner as in Example 2-1 except that Silane Compound 1 (compound of Formula (4)) was not contained and 3.2 parts by mass of another silane compound (Si69) (manufactured by Degussa) was added.

### (6) Comparative Example 2-2

A rubber composition and a rubber sheet were obtained in the same manner as in Example 2-2 except that Silane Compound 1 (compound of Formula (4)) was not contained and 3.2 parts by mass of another silane compound (Si69) (manufactured by Degussa.) was added.

### (7) Comparative Example 2-3

A rubber composition and a rubber sheet were obtained in the same manner as in Example 2-3 except that Silane Compound 1 (compound of Formula (4)) was not contained and 3.2 parts by mass of another silane compound (Si69) (manufactured by Degussa) was added.

### (8) Comparative Example 2-4

A rubber composition and a rubber sheet were obtained in the same manner as in Example 2-4 except that Silane Compound 1 (compound of Formula (4)) was not contained and 3.2 parts by mass of another silane compound (Si69) (manufactured by Degussa) was added.

### (9) Comparative Example 2-5

A rubber composition and a rubber sheet were obtained in the same manner as in Example 2-1 except that the Silane Compound 1 (compound of Formula (4)) was not contained, 3.2 parts by mass of another silane compound (Si69) (manufactured by Degussa) was added, and a 50% aqueous solution of glutaraldehyde was not contained.

### (10) Physical Property Evaluation

Physical properties of the rubber compositions and rubber sheets obtained in Examples 2-1 to 2-4 and Comparative Examples 2-1 to 2-5 were evaluated by the method described in 2. Example 1 (6) Physical Property Evaluation described above.

The above measurement results and calculation results (tan δ balance) are shown in Table 2. Each measured value and each calculated value are shown as relative values when each value in Comparative Example 2-5 is set to 100.

**[Table 2]**

| Table 2 | | Ex. 2-1 | Ex 2-2 | Ex. 2-3 | Ex 2-4 | Comp. Ex 2-1 | Comp. Ex. 2-2 | Comp. Ex. 2-3 | Comp. Ex. 2-4 | Comp. Ex 2-5 |
|---|---|---|---|---|---|---|---|---|---|---|
| Composition of Rubber composition (parts by mass) | Natural Rubber (RSS#3) | 100 | 100 | 100 | 100 | 100 | 100 | 100 | 100 | 100 |
| | Silica AQ | 40 | 40 | 40 | 40 | 40 | 40 | 40 | 40 | 40 |
| | Zinc Oxide No. 3 | 3 | 3 | 3 | 3 | 3 | 3 | 3 | 3 | 3 |
| | Stearic acid | 1 | 1 | 1 | 1 | 1 | 1 | 1 | 1 | 1 |
| | Anti-aging agent (NOCRAC 6C) | 1 | 1 | 1 | 1 | 1 | 1 | 1 | 1 | 1 |
| | Silane Compound 1 (Compound of Formula (4)) | 3.2 | 3.2 | 3.2 | 3.2 | 0 | 0 | 0 | 0 | 0 |
| | Anther Silane Compound (Si69) | 0 | 0 | 0 | 0 | 3.2 | 3.2 | 3.2 | 3.2 | 3.2 |
| | Protein modifying agent 2 (50% aqueous solution of glutaraldehyde) | 2 | 0 | 0 | 0 | 2 | 0 | 0 | 0 | 0 |
| | Protein modifying agent 3 (dimethyl suberimidate dihydrochloride) | 0 | 1 | 0 | 0 | 0 | 1 | 0 | 0 | 0 |
| | Protein modifying agent 4 (sodium dodecyl sulfate) | 0 | 0 | 1 | 0 | 0 | 0 | 1 | 0 | 0 |
| | Protein modifying agent 5 (guanidine hydrochloride) | 0 | 0 | 0 | 1 | 0 | 0 | 0 | 1 | 0 |
| | Sulfur (5% oil treated) | 2 | 2 | 2 | 2 | 2 | 2 | 2 | 2 | 2 |
| | Vulcanization accelerator (NOCCELER CZ) | 1 | 1 | 1 | 1 | 1 | 1 | 1 | 1 | 1 |
| | Vulcanization accelerator (NOCCELER D) | 0.5 | 0.5 | 0.5 | 0.5 | 0.5 | 0.5 | 0.5 | 0.5 | 0.5 |
| Viscosity | ML1+4 100°C (index) | 92.8 | 96.2 | 88.4 | 92.1 | 100.5 | 103.3 | 94.6 | 95.2 | 100 |
| Hardness | JIS-A Hardness | 103 | 105 | 103 | 105 | 105 | 103 | 98 | 102 | 100 |
| Viscoelasti city | tanδ(0 °C) (index) | 100 | 97 | 101 | 97 | 98 | 97 | 100 | 97 | 100 |
| | tanδ(60 °C) (index) | 97 | 93 | 99 | 92 | 103 | 99 | 110 | 98 | 100 |
| | tanδ(0 °C)/tanδ(60 °C)(index) | 103 | 104 | 102 | 106 | 95 | 98 | 91 | 99 | 100 |
| Tensile strength | 100% Modulus (index) | 111 | 111 | 109 | 108 | 103 | 107 | 91 | 102 | 100 |

The results of Examples 2-1 to 2-4 show improvement in tan δ balance and increase in tensile strength (100% modulus). Therefore, it has been found that tires having excellent balance between wet grip and low fuel consumption can be produced in practice by using the rubber compositions of the present invention. Further, it has been found that similar effects can be obtained by using glutaraldehyde, dimethyl suberimidate dihydrochloride, sodium dodecyl sulfate, or guanidine hydrochloride as the protein modifying agents instead of urea used in Example 1.

### 4. Example 3: Preparation and Evaluation of Rubber Composition and Rubber Sheet Containing Silane Compound, Urea and Natural Rubber (Part 3: Evaluation of Silane Compound 2)

### (1) Example 3-1

### Preparation of Rubber Composition and Rubber Sheet

Each of the following components was kneaded using a 100 mL kneader (Laboplast mill manufactured by Toyo Seiki Co., Ltd.) in the same manner as in Example 1-1 to obtain a rubber composition.

Then, the rubber composition was placed in a mold (150 mm × 150 mm × 2 mm) and heated and pressurized at 150 °C for 25 minutes to obtain a rubber sheet having a thickness of 2 mm.
- Natural rubber (RSS #3, made in NZ) 100 parts by mass
- Protein Modifying Agent 1 (product name: urea; manufactured by Wako Pure Chemical Corporation) 1 part by mass
- Silane Compound 2 (Compound of Formula (5)) (product name: NXT Z45 silane, manufactured by Momentive) 3.2 parts by mass
- Silica AQ (product name : Nip Seal AQ; manufactured by Tosoh Corporation) 40 parts by mass
- Zinc Oxide No. 3 (product name: Ginrei R, manufactured by Toho Zinc Co., Ltd.) 3 parts by mass
- Stearic Acid (product name : Stearic acid 300; manufactured by New Japan Chemical Co., Ltd.) 1 part by mass
- Anti-aging agent (manufactured by Ouchi Shinko Chemical Industrial Co., Ltd., NOCRAC 6C) 1 part by mass
- Sulfur (manufactured by Kawagoe Chemistry) 2.00 parts by mass
- Vulcanization accelerator (product name : NOCCELER CZ, manufactured by Ouchi Shinko Chemical Industrial Co., Ltd.) 1 part by mass
- Vulcanization accelerator (product name: NOCCELER D, manufactured by Ouchi Shinko Chemical Industrial Co., Ltd.) 0.5 parts by mass

### (2) Example 3-2

A rubber composition and a rubber sheet were obtained in the same manner as in Example 3-1 except that urea was not contained and 1 part by mass of Protein Modifying Agent 4 (sodium dodecyl sulfate) was added.

### (3) Example 3-3

A rubber composition and a rubber sheet were obtained in the same manner as in Example 3-1 except that urea was not contained and 1 part by mass of Protein Modifying Agent 5 (guanidine hydrochloride) was added.

### (4) Example 3-4

A rubber composition and a rubber sheet were obtained in the same manner as in Example 3-1 except that addition of 3.2 parts by mass of the Silane Compound 2 (compound of Formula (5)) was replaced with addition of 1.6 parts by mass of Silane Compound 2 and 1.6 parts by mass of another silane compound (Si69) (manufactured by Degussa).

### (5) Comparative Example 3-1

A rubber composition and a rubber sheet were obtained in the same manner as in Example 3-1 except that Silane Compound 2 (compound of Formula (5)) was not contained and 3.2 parts by mass of another silane compound (Si69) (manufactured by Degussa) was added.

### (6) Comparative Example 3-2

A rubber composition and a rubber sheet were obtained in the same manner as in Example 3-2 except that Silane Compound 2 (compound of Formula (5)) was not contained and 3.2 parts by mass of another silane compound (Si69) (manufactured by Degussa) was added.

### (7) Comparative Example 3-3

A rubber composition and a rubber sheet were obtained in the same manner as in Example 3-3 except that Silane Compound 2 (compound of Formula (5)) was not contained and 3.2 parts by mass of another silane compound (Si69) (manufactured by Degussa) was added.

### (8) Comparative Example 3-4

A rubber composition and a rubber sheet were obtained in the same manner as in Example 3-4 except that urea was not contained.

### (9) Comparative Example 3-5

A rubber composition and a rubber sheet were obtained in the same manner as in Example 3-1 except that urea was not contained.

### (10) Comparative Example 3-6

A rubber composition and a rubber sheet were obtained in the same manner as Comparative Example 3-1 except that urea was not contained.

### (11) Physical Property Evaluation

Physical properties of the rubber compositions and rubber sheets obtained in Examples 3-1 to 3-4 and Comparative Examples 3-1 to 3-6 were evaluated by the method described in 2. Example 1 (6) Physical Property Evaluation above.

The above measurement results and calculation results (tan δ balance) are shown in Table 3. Each measured value and each calculated value are shown as relative values when each value in Comparative Example 3-6 is set to 100.

**[Table 3]**

| Table 3 | | Ex. 3-1 | Ex. 3-2 | Ex. 3-3 | Ex. 3-4 | Comp. Ex. 3-1 | Comp. Ex. 3-2 | Comp. Ex. 3-3 | Comp. Ex. 3-4 | Comp. Ex. 3-5 | Comp. Ex. 3-6 |
|---|---|---|---|---|---|---|---|---|---|---|---|
| Composition of Rubber composition (parts by mass) | Natural Rubber (RSS#3) | 100 | 100 | 100 | 100 | 100 | 100 | 100 | 100 | 100 | 100 |
| | Silica AQ | 40 | 40 | 40 | 40 | 40 | 40 | 40 | 40 | 40 | 40 |
| | Zinc Oxide No. 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 |
| | Anti-aging agent (NOCRAC 6C) | 1 | 1 | 1 | 1 | 1 | 1 | 1 | 1 | 1 | 1 |
| | Silane Compound 2 (Compound of Formula (5)) | 3.2 | 3.2 | 3,2 | 1.6 | 0 | 0 | 0 | 1.6 | 3.2 | 0 |
| | Another Silane Compound (Si69) | 0 | 0 | 0 | 1.6 | 3.2 | 3.2 | 3.2 | 1.6 | 0 | 3.2 |
| | Protein-mod ifying agent 1 (urea) | 1 | 0 | 0 | 1 | 1 | 0 | 0 | 0 | 0 | 0 |
| | Protein modifying agent 4 (sodium dodecyl sulfate) | 0 | 1 | 0 | 0 | 0 | 1 | 0 | 0 | 0 | 0 |
| | Protein modifying agent 5 (guanidine hydrochloride) | 0 | 0 | 1 | 0 | 0 | 0 | 1 | 0 | 0 | 0 |
| | Sulfur (5% oil treated) | 2 | 2 | 2 | 2 | 2 | 2 | 2 | 2 | 2 | 2 |
| | Vulcanization accelerator (NOCCELER CZ) | 1 | 1 | 1 | 1 | 1 | 1 | 1 | 1 | 1 | 1 |
| | Vulcanization accelerator (NOCCELER D) | 0.5 | 0.5 | 0.5 | 0.5 | 0.5 | 0.5 | 0.5 | 0.5 | 0.5 | 0.5 |
| Viscosity | ML1+4 100 °C (index) | 93 | 89 | 92 | 94 | 98 | 96 | 96 | 98 | 94 | 100 |
| Hardness | JIS-A Hardness | 102 | 103 | 103 | 102 | 100 | 98 | 102 | 100 | 107 | 100 |
| Viscoelasticity | tanδ(0 °C) (index) | 94 | 101 | 98 | 100 | 100 | 100 | 98 | 99 | 99 | 100 |
| | tanδ(60 °C) (index) | 76 | 90 | 89 | 87 | 90 | 108 | 97 | 93 | 94 | 100 |
| | tanδ(0 °C)/tanδ(60 °C)(index) | 122 | 112 | 110 | 115 | 111 | 92 | 101 | 106 | 105 | 100 |
| Tensile strength | 100% Modulus (index) | 111 | 109 | 107 | 112 | 103 | 91 | 102 | 98 | 98 | 100 |

The results of Examples 3-1 to 3-4 show improvement in tan δ balance and increase in tensile strength (100 % modulus). Therefore, it has been found that tires having an excellent balance between wet grip and low fuel consumption can be produced in practice by using the rubber compositions of the present invention. Further, it has been found that similar effects can be obtained by using Silane Compound 2 a mixture of Silane Compound 2 and another silane compound instead of Silane Compound 1 used in Example 1.

## Claims

1. A silane coupling agent composition comprising a silane compound represented by Formula (1): 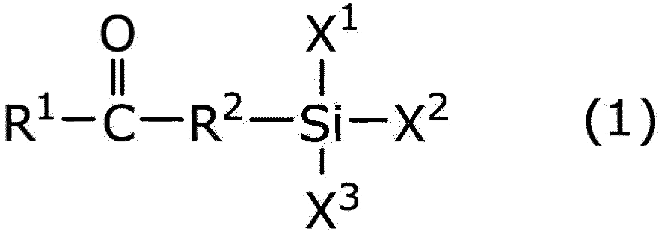
wherein R¹ represents a hydrogen atom or a monovalent hydrocarbon group containing at most 18 carbon atoms,
R² represents a bivalent hydrocarbon group containing at most 12 carbon atoms,
X¹ is selected from the group consisting of R³O- and R³C(= O)O-, wherein R³ represents a hydrogen atom or a monovalent hydrocarbon group containing at most 18 carbon atoms or a monovalent hydrocarbon group containing at most 18 carbon atoms and at least one oxygen atom,
X² and X³ is each independently selected from the group consisting of the elements listed in X¹ and R⁴, wherein R⁴ is a monovalent hydrocarbon group containing at most 6 carbon atoms; and/or a condensate thereof, and a protein modifying agent.

2. The silane coupling agent composition according to claim 1, wherein
the silane compound is selected from the group consisting of triethoxysilylmethyl thioformate, 2-triethoxysilylethyl thioacetate, 3-triethoxysilylpropyl thiopropanoate, 3-triethoxysilylpropyl thiohexanoate, 3-octanoylthio-1-propyltriethoxysilane(3-triethoxysilylpropyl thiooctanoate), 3-diethoxymethylsilylpropyl thiooctanoate, 3-ethoxydimethylsilylpropyl thiooctanoate, 3-triethoxysilylpropyl thiododecanoate, 3-triethoxysilylpropyl thiooctadecanoate, 3-trimethoxysilylpropyl thiooctanoate, 3-triacetoxysilylpropyl thioacetate, 3-dipropoxymethylsilylpropyl thiopropanoate, 4-oxa-hexyloxydimethylsilylpropyl thiooctanoate, and mixtures thereof.

3. The silane coupling agent composition according to claim 1, wherein
the silane compound is selected from the group consisting of 3-octanoylthio-1-propyltriethoxysilane(3-triethoxysilylpropyl thiooctanoate), 3-diethoxymethylsilylpropyl thiooctanoate, and 3-ethoxydimethylsilylpropyl thiooctanoate.

4. The silane coupling agent composition according to claim 1, wherein
the silane compound is 3-octanoylthio-1-propyltriethoxysilane(3-triethoxysilylpropyl thiooctanoate).

5. The silane coupling agent composition according to any one of claims 1 to 4, wherein
the condensate is a condensate of 3-octanoylthio-1-propyltriethoxysilane(3-triethoxysilylpropyl thiooctanoate) and 3-mercaptopropyltriethoxysilane.

6. The silane coupling agent composition according to any one of claims 1 to 5, wherein
the protein modifying agent is at least one selected from the group consisting of a carbamide compound, a guanidine compound, and a surfactant.

7. The silane coupling agent composition according to claim 6, wherein
the carbamide compound is urea.

8. The silane coupling agent composition according to claim 6, wherein
the guanidine compound is at least one selected from the group consisting of guanidine hydrochloride and diphenylguanidine.

9. The silane coupling agent composition according to claim 6, wherein
the surfactant is sodium dodecyl sulfate.

10. The silane coupling agent composition according to any one of claims 1 to 9, further comprising a silane compound other than the compound represented by Formula (1).

11. The silane coupling agent composition according to claim 10, wherein
the silane compound other than the compound represented by Formula (1) is a silane compound represented by Formula (3): 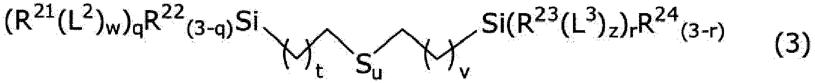
wherein t and v are each independently an integer from 0 to 10,
u is an integer from 2 to 10,
q and r are each independently an integer from 1 to 3,
wand z are each independently an integer from 0 to 1,
L² and L³ are each independently a hydrocarbon group optionally containing at least one heteroatom selected from the group consisting of nitrogen, oxygen, and sulfur,
R²¹ and R²³ are each independently an alkoxy group or an amino group substituted with one or more alkyl groups; and
R²² and R²⁴ are each independently hydrogen or an alkyl group.

12. The silane coupling agent composition according to any one of claims 1 to 11, wherein
the ratio of the content of the silane compound other than the compound represented by Formula (1) in the silane coupling agent composition with respect to the total content of the silane compound in the silane coupling agent composition is 0.1 to 0.9 on a mass basis.

13. The silane coupling agent composition according to any one of claims 1 to 12, used for natural rubber or deproteinized natural rubber.

14. A rubber composition comprising the silane coupling agent composition according to any one of claims 1 to 13, at least one elastomer having a glass transition point of 25 °C or less selected from the group consisting of natural rubber and deproteinized natural rubber, and an inorganic material.

15. The rubber composition according to claim 14, wherein
the total content of the silane compound in the rubber composition is 0.1 to 30 parts by mass with respect to 100 parts by mass of the elastomer.

16. A method for producing the rubber composition according to claim 14 or 15, comprising the step of kneading the silane compound, the protein modifying agent, the elastomer, and the inorganic material.

17. The method according to claim 16, further comprising the step of prekneading the protein modifying agent and the elastomer prior to the step of kneading the silane compound, the protein modifying agent, the elastomer, and the inorganic material.

18. The method according to claim 16 or 17, further comprising the step of kneading a vulcanizing agent.

19. A cross-linked product of the rubber composition according to claim 14 or 15.

20. A method for producing a cross-linked product comprising the step of extruding the rubber composition according to claim 14 or 15, the step of molding the extruded composition, and the step of cross-linking the molded composition.

21. A tire comprising the cross-linked product according to claim 19.
